# EUROPÄISCHE PATENTSCHRIFT

(11) **EP 3 022 443 B1**
(45) Veröffentlichungstag und Bekanntmachung des Hinweises auf die Patenterteilung: **29.04.2020**
(21) Anmeldenummer: 14728924.3
(22) Anmeldetag: 04.06.2014
(51) Int. Cl.: F04B 17/04

(54) **KOLBEN FÜR EINE SCHWINGANKERPUMPE**
PISTON FOR A VIBRATING ARMATURE PUMP
PISTON POUR UNE POMPE À ARMATURE OSCILLANTE

(30) Priorität: 15.07.2013 DE 102013107481
(43) Veröffentlichungstag der Anmeldung: 25.05.2016
(73) Patentinhaber: Sysko AG, 7001 Chur (CH)
(72) Erfinder: OTT, Hubert, 88212 Ravensburg (DE); HELBLING, Norbert, 8645 Jona (CH)
(74) Vertreter: Daub, Thomas
(86) Internationale Anmeldenummer: PCT/EP2014/061579
(87) Internationale Veröffentlichungsnummer: WO 2015/007429

(56) Entgegenhaltungen:
- EP-A1- 0 383 064
- EP-B1- 0 288 216
- CH-A- 434 466
- DE-A1- 3 109 090
- DE-A1-102005 035 835
- DE-A1-102005 048 765
- DE-A1-102010 044 775
- DE-T2- 60 016 905
- DE-U1-202005 006 584

## Beschreibung

### Stand der Technik

Die Erfindung betrifft einen Kolben für eine Schwingankerpumpe sowie eine Schwingankerpumpe und ein Verfahren zur Herstellung eines Kolbens für eine Schwingankerpumpe.

Aus der WO 2013/004620 A1 ist bereits ein Kolben für eine Schwingankerpumpe, insbesondere für ein Haushaltsgerät mit einer Schwingankerpumpe, der zur Förderung eines Fluids unter Wirkung eines Gegendrucks vorgesehen ist, mit einem Druckkolbenelement und einem von dem Druckkolbenelement getrennt ausgeführten, für zumindest eine Kraftrichtung fest mit dem Druckkolbenelement gekoppelten Ankerelement, das in Form einer Hülse ausgeführt ist und das wenigstens teilweise aus einem magnetisierbaren Material besteht, bekannt.

Die Druckschrift EP 0 288 216 A1 offenbart eine Fluidpumpe mit einem Ankerelement, wobei das Ankerelement als massives Bauteil ausgebildet ist.

Die Druckschrift DE 102005048765 A1 offenbart eine Schwingankerpumpe mit einem zylinderförmigen Ankerelement zur Aufnahme eines Pumpenkolbens.

Die Druckschrift DE 102010044775 A1 offenbart einen Kolben für eine Schwingankerpumpe, der zur Förderung eines Fluids unter Wirkung eines Gegendrucks vorgesehen ist, mit einem Druckkolbenelement und einem von dem Druckkolbenelement getrennt ausgeführten, für zumindest eine Kraftrichtung fest mit dem Druckkolbenelement gekoppelten Ankerelement, das in Form einer Hülse ausgeführt ist und das wenigstens teilweise aus einem magnetisierbaren Material besteht.

Die Aufgabe der Erfindung besteht insbesondere darin, Herstellungskosten für eine Schwingankerpumpe zu senken. Die Aufgabe wird erfindungsgemäß durch die Merkmale der unabhängigen Patentansprüche gelöst, während vorteilhafte Ausgestaltungen und Weiterbildungen der Erfindung den Unteransprüchen entnommen werden können.

### Vorteile der Erfindung

Die Erfindung geht aus von einem Kolben für eine Schwingankerpumpe, insbesondere für ein Haushaltsgerät mit einer Schwingankerpumpe, der zur Förderung eines Fluids unter Wirkung eines Gegendrucks vorgesehen ist, mit einem Druckkolbenelement und einem von dem Druckkolbenelement getrennt ausgeführten, für zumindest eine Kraftrichtung fest mit dem Druckkolbenelement gekoppelten Ankerelement, das in Form einer Hülse ausgeführt ist und das wenigstens teilweise aus einem magnetisierbaren Material besteht.

Es wird vorgeschlagen, dass das Ankerelement als ein Biegebauteil ausgebildet ist. Dadurch kann auf eine spanende Bearbeitung eines Rohlings zur Einbringung von Kanälen verzichtet werden, wodurch insbesondere ein Materialbedarf an magnetisierbarem Material für die Herstellung des Ankerelements reduziert werden kann. Zudem kann das Ankerelement einfach mit einem beliebigenDurchmesser versehen werden, ohne dass hierdurch ein Materialausschuss ansteigt. Dadurch kann das Ankerelement mit geringen Mehrkosten mit einem Außendurchmesser versehen werden, der größer ist als ein Außendurchmesser vergleichbarer Kolben. Durch einen vergrößerten Außendurchmesser wiederum kann ein durch eine Magnetspule erzeugbares Magnetfeld besser mit dem Ankerelement durchsetzt werden, wodurch die Magnetspule kleiner dimensioniert werden kann. Dadurch können die Mehrkosten, welche mit der Vergrößerung des Außendurchmessers des Kolbens einhergehen, wieder kompensiert werden, wodurch insgesamt Herstellungskosten für eine Schwingankerpumpe gesenkt werden können. Unter einem Kolben mit einem Druckkolbenelement und einem Ankerelement soll in diesem Zusammenhang insbesondere ein zumindest zweiteiliger Kolben verstanden werden, der zumindest ein Bauteil, das im Wesentlichen zur Förderung des Fluids vorgesehen ist, und ein Bauteil, das im Zusammenspiel mit einer Magnetspule zur Bewegung des Kolbens vorgesehen ist, aufweist. Unter "zumindest in einer Kraftrichtung fest gekoppelt" soll insbesondere verstanden werden, dass das Ankerelement zumindest für eine Richtung, die einer mittels der Magnetspule erzeugbaren Betätigungskraft entspricht, starr mit dem Druckkolbenelement gekoppelt ist. Vorzugsweise ist das Ankerelement lediglich für eine Kraftrichtung fest mit dem Druckkolbenelement gekoppelt. Unter "in Form einer Hülse" soll insbesondere eine im Wesentlichen hohlzylinderförmige Ausgestaltung des Ankerelements verstanden werden, wobei das Ankerelement grundsätzlich in Form einer längs geschlitzten Hülse als auch in Form einer geschlossen, beispielsweise verschweißten, Hülse ausgebildet sein kann. Unter einer Ausbildung als "Biegebauteil" soll insbesondere verstanden werden, dass das Ankerelement durch Umformen eines Halbzeugs geformt wird, indem auf das Halbzeug eine plastische Umformkraft ausgeübt wird, welche eine dauerhafte Verformung herbeiführt. Unter "Biegebauteil" soll dabei insbesondere kein Strangpressbauteil verstanden werden, welches durch umformen mittels einer Matrize, durch die ein Rohling hindurchgepresst wird, erzeugt wird, wie beispielsweise ein nahtloses Rohr.

Weiter wird vorgeschlagen, dass das Ankerelement als ein Blechbiegeteil ausgebildet ist, welches in Form der Hülse gerollt ist. Dadurch kann das Ankerelement besonders einfach in Form eines Rohres ausgebildet werden, welches einen zumindest im Wesentlichen runden Querschnitt aufweist, womit erreicht werden kann, dass das Ankerelement bei einem Betrieb der Magnetspule gleichmäßig einem magnetischen Fluss ausgesetzt, ist wodurch eine gleichmäßige Krafteinwirkung auf das Ankerelement erreicht werden kann. Unter "gerollt" soll dabei insbesondere verstanden werden, dass das Ankerelement aus einem Blech geformt wird, das entlang einer Quererstreckungsrichtung mit einer über einen gesamten Umfang im Wesentlichen gleich großen Krümmung versehen wird, wodurch das Ankerelement nach seiner Formung in einem Querschnitt in Form eines Kreisringsegments ausgebildet ist, welches eine Umfangserstreckung von zumindest 270 °, vorzugsweise zumindest 315 ° und besonders bevorzugt von zumindest nahezu 360 ° aufweist. Unter "nahezu 360 °" soll dabei inbesondere verstanden werden, dass der nach dem Rollen verbleibende Längsschlitz, welcher entlang einer Längsachse des Ankerelements verläuft, einen Winkel kleiner als 1 ° aufweist, wobei sämtliche Winkelangaben auf eine Mittelpunktsachse des Ankerelements bezogen sind.

In einer Weiterbildung der Erfindung wird vorgeschlagen, dass das Ankerelement zumindest ein äußeres Blechelement und zumindest ein wenigstens teilweise innerhalb des äußeren Blechelements angeordnetes inneres Blechelement aufweist. Dadurch kann eine Stabilität des Ankerelements erhöht werden, insbesondere wenn die Blechelemente gegeneinander verdreht sind, um die durch das Umbiegen entstehenden Längsschnitte an unterschiedlichen Stellen anzuordnen. Grundsätzlich kann das Ankerelement aber auch aus lediglich einem Blechelement geformt werden. Unter einem "inneren Blechelement" und einem "äußeren Blechelement" sollen dabei insbesondere zwei ineinander geschachtelte Blechelemente verstanden werden, wobei eine Außenkontur des inneren Blechelements einer Innenkontur des äußeren Blechelements entspricht. Das Ankerelement weist dabei einen Innendurchmesser, der einem Innendurchmesser des inneren Blechelements entspricht, und einen Außendurchmesser auf, der einem Außendurchmesser des äußeren Blechelements entspricht.

Vorteilhafterweise steht dabei das äußere Blechelement in axialer Richtung über das innere Blechelement über. Dadurch kann eine Aufnahme für eine Dämpfungsfeder einfach realisiert werden, wodurch eine Schwingkolbenpumpe mit einer Pumpfeder und einer der Pumpfeder entgegenwirkenden Dämpfungsfeder einfach bereitgestellt werden kann. Grundsätzlich kann dadurch aber auch eine Führung des Magnetfelds durch das Ankerelement verbessert werden, insbesondere wenn die Schwingkolbenpumpe lediglich mit der Pumpfeder vorgesehen wird und auf die Dämpfungsfeder verzichtet wird. Vorzugsweise weisen dabei die Blechelemente unterschiedliche Längen auf. In Abhängigkeit von einer gewünschten Ausgestaltung kann dabei das äußere Blechelement lediglich auf einer Seite über das innere Blechelement überstehen oder das äußere Blechelement kann auf beiden Seiten über das innere Blechelement überstehen. Grundsätzlich ist es auch denkbar, die Blechelemente mit gleicher Länge auszubilden und axial gegeneinander zu versetzen, wodurch auf einer Seite das äußere Blechelement über das innere Blechelement und auf einer Seite das innere Blechelement über das äußere Blechelement übersteht. Eine Aufnahme für die Dämpfungsfeder kann dabei auch ausgebildet werden, indem das innere Blechelement über das äußere Blechelement übersteht.

Besonders vorteilhaft ist das Ankerelement korrosionsbeständig. Dadurch kann der Kolben in Schwingankerpumpen eingesetzt werden, die besondere hygienische Anforderungen aufweisen und/oder die zum Pumpen korrosiver Fluide vorgesehen sind. Der Kolben kann dadurch insbesondere für Kaffeeautomaten vorgesehen werden.

Weiter wird vorgeschlagen, dass das Druckkolbenelement das Ankerelement vollständig durchsetzt. Dadurch kann einerseits das Ankerelement einfach mit dem Druckkolbenelement verbunden werden. Insbesondere kann dadurch eine Anzahl von Bauteilen, welche der Kolben aufweist, reduziert werden, da dadurch insbesondere auf separate Verbindungselemente zur Verbindung des Ankerelements mit dem Druckkolbenelement verzichtet werden kann. Unter "vollständig durchsetzt" soll in diesem Zusammenhang insbesondere verstanden werden, dass das Druckkolbenelement beidseitig über das Ankerelement übersteht.

In einer vorteilhaften Ausgestaltung ist das Ankerelement auf das Druckkolbenelement aufgesteckt. Dadurch kann eine Montage des Ankerelements vereinfacht werden. Unter aufgesteckt soll dabei insbesondere verstanden werden, dass das Ankerelement in axialer Richtung lediglich durch einen Formschluss, welcher eine Aufstecktiefe begrenzt, fixiert ist. Das Ankerelement ist dabei insbesondere frei von Formgebungen, die zum Eingriff in einen Hinterschnitt an dem Druckkolbenelement vorgesehen sind.

Zudem wird vorgeschlagen, dass das Druckkolbenelement als ein Kunststoffteil ausgebildet ist. Dadurch kann das Druckkolbenelement einfach und kostengünstig hergestellt werden. Indem das gerollte Ankerelement im Vergleich zu bekannten Ankerelementen einen vergrößerten Innendurchmesser aufweist, kann zudem ausreichend Bauraum innerhalb des Ankerelements bereitgestellt werden, wodurch das Druckkolbenelement mit einer ausreichenden Festigkeit versehen werden kann.

Vorzugsweise ist das Druckkolbenelement als ein Spritzgussbauteil ausgebildet. Dadurch kann das Druckkolbenelement besonders kostengünstig hergestellt werden, insbesondere wenn es eine komplexe Geometrie aufweist. Grundsätzlich ist aber auch eine Ausgestaltung als Tiefziehbauteil denkbar.

Weiter wird vorgeschlagen, dass das Druckkolbenelemente zumindest einen Druckausgleichskanal aufweist. Dadurch kann zwischen verschiedenen Bereichen um das Druckkolbenelement einfach ein Druckausgleich hergestellt werden. Dabei können die Druckausgleichskanäle besonders einfach in dem Druckkolbenelement vorgesehen werden, wenn das Druckkolbenelement einen Druckausgleichskanal aufweist.

Ferner ist es vorteilhaft, wenn der Kolben ein Dichtelement, vorzugsweise in Form einer Hülse, aufweist, welches fest mit dem Druckkolbenelement verbunden ist. Dadurch kann insbesondere eine Trockenlaufsicherheit erhöht werden, da ein Abrieb bei fehlender Schmierwirkung durch das zu pumpende Fluid verringert werden kann, insbesondere wenn das Druckkolbenelement als ein Kunststoffteil ausgebildet ist. Zudem kann eine Lebensdauer erhöht werden, da das Dichtelement hinsichtlich seiner Materialeigenschaften auf eine gute Dichtwirkung angepasst werden kann. Vorzugsweise ist das Dichtelement in Form eines umgebördelten Metallrohres, insbesondere in Form eines umgebördelten Edelstahlrohres, ausgeführt. Insbesondere ist es vorteilhaft, wenn das Dichtelement als ein Tiefziehteil ausgebildet ist.

Weiter wird eine Schwingkolbenpumpe für einen Kaffeeautomat mit einem erfindungsgemäßen Kolben vorgeschlagen.

Zudem wird eine Schwingkolbenpumpe, insbesondere für ein Haushaltsgerät, mit einer Magnetspule und mit einem Kolben, der ein Druckkolbenelement zur Förderung eines Fluids und ein von dem Druckkolbenelement getrennt ausgeführtes, für zumindest eine Kraftrichtung fest mit dem Druckkolbenelement gekoppeltes Ankerelement in Form einer Hülse, die wenigstens teilweise aus einem magnetisierbaren Material besteht, aufweist, insbesondere mit einem erfindungsgemäßen Kolben nach einem der vorhergehenden Ansprüche, vorgeschlagen, wobei die Magnetspule einen Spulendurchmesser aufweist, der höchstens um einen Faktor 3,0 größer ist als ein Außendurchmesser des Ankerelements. Indem der Spulendurchmesser höchstens um einen Faktor 3,0 größer ist als der Außendurchmesser des Ankerelements, kann eine besonders gute Kopplung erreicht werden, wodurch eine Anzahl von Wicklungen der Magnetfeldspule reduziert werden kann. Dadurch kann insbesondere Kupfer zur Herstellung der Magnetfeldspule eingespart werden, wodurch Kosten gesenkt werden können. Zudem kann mit dem vergrößerten Spulendurchmesser eine bessere Kühlung der Magnetspule erreicht werden, wodurch insbesondere für einen Kaffeeautomaten eine Schwingkolbenpumpe bereitgestellt werden kann, welche auch bei einer rasch hintereinander folgenden Anzahl von Kaffeebezügen eine nahezu konstante Pumpleistung bereitstellen kann, da insbesondere eine Temperaturerhöhung und damit eine Erhöhung eines inneren Widerstands der Schwingankerpumpe durch die verbesserte Kühlung gering gehalten werden kann.

Insbesondere bei einer als Niederdruckpumpe ausgebildeten Schwingkolbenpumpe ist der Faktor höchsten 3,0. Grundsätzlich kann der Faktor auch kleiner sein, insbesondere wenn die Schwingkolbenpumpe als Hochdruckpumpe ausgebildet ist, wo der Faktor beispielsweise kleiner als 2,7 oder kleiner als 2,5 sein kann. Unter einem Spulendurchmesser soll dabei insbesondere ein Außendurchmesser eines Spulengehäuses verstanden werden. Unter einem "Spulengehäuse" soll insbesondere ein vorzugsweise zylinderförmiges Gehäuse der Magnetspule verstanden werden, welches Kupferwicklungen der Spule umschließt. Grundsätzlich kann zwischen den Kupferwicklungen und dem Spulengehäuse ein Luftspalt vorgesehen sein. Insbesondere ist es aber auch denkbar, dass das Spulengehäuse ausgebildet wird, indem die Kupferwicklungen umspritzt werden. Vorzugsweise weist die Spule einen Wicklungsdurchmesser auf, der höchsten um einem Faktor 2,5 größer ist der Außendurchmesser des Ankerelements. Unter einem "Wicklungsdurchmesser" soll dabei insbesondere ein maximaler Durchmesser der Kupferwicklungen verstanden werden. Unter einer "Niederdruckpumpe" soll dabei insbesondere eine Schwingkolbenpumpe verstanden werden, die dazu vorgesehen ist, einen Druck von höchstens 5 bar, vorzugsweise höchstens 3 bar, bereitzustellen. Ein Betriebsbereich, in dem eine Niederdruckpumpe eine nutzbare Pumpleistung bereitstellt, liegt dabei insbesondere in einem Druckbereich zwischen 1,5 bar und 2,0 bar. Unter einer "Hochdruckpumpe" soll dabei insbesondere eine Schwingkolbenpumpe verstanden werden, die dazu vorgesehen ist, einen Druck von zumindest 10 bar, vorzugsweise zumindest 14 bar, bereitzustellen. Ein Betriebsbereich, in dem eine Hochdruckpumpe eine nutzbare Pumpleistung bereitstellt, liegt dabei insbesondere in einem Druckbereich zwischen 10 bar und 14 bar.

Zudem wird ein Verfahren zur Herstellung eines Kolbens für eine Schwingankerpumpe, der zur Förderung eines Fluids unter Wirkung eines Gegendrucks vorgesehen ist, mit einem Druckkolbenelement und einem von dem Druckkolbenelement getrennt ausgeführten, für zumindest eine Kraftrichtung fest mit dem Druckkolbenelement gekoppelten Ankerelement, das wenigstens teilweise aus einem magnetisierbaren Material besteht, bei dem das Ankerelement in die Form der Hülse gebogen wird.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Längsschnitt durch eine Schwingankerpumpe,
- Fig. 2: ein Ankerelement eines Kolbens der Schwingankerpumpe in einer Aufsicht,
- Fig. 3: das Ankerelement in einem Längsschnitt,
- Fig. 4: ein Druckkolbenelement des Kolbens in einem Längsschnitt,
- Fig. 5: eine Aufsicht auf das Druckkolbenelement mit aufgestecktem Ankerelement und
- Fig. 6: einen Längsschnitt durch eine Schwingankerpumpe in alternativer Ausgestaltung.

### Beschreibung der Ausführungsbeispiele

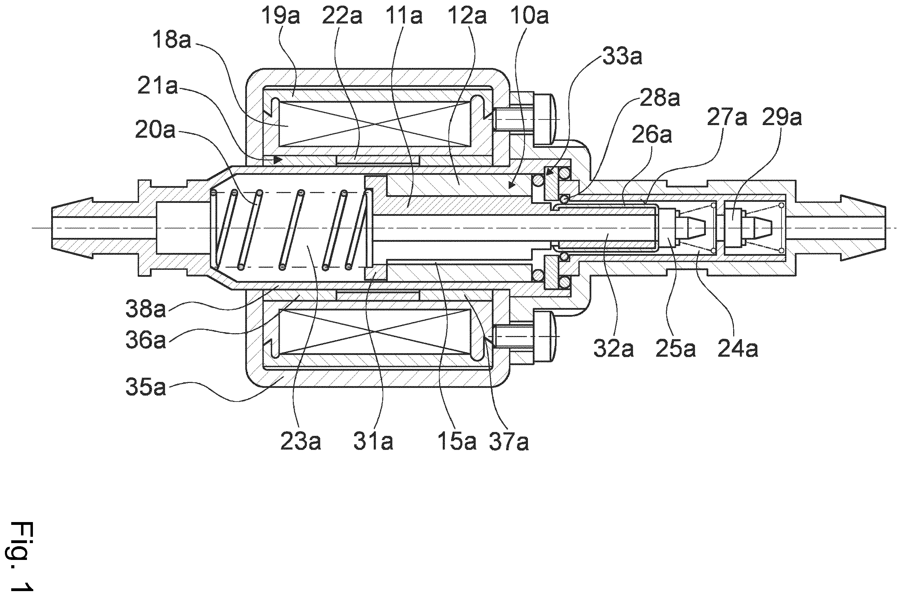

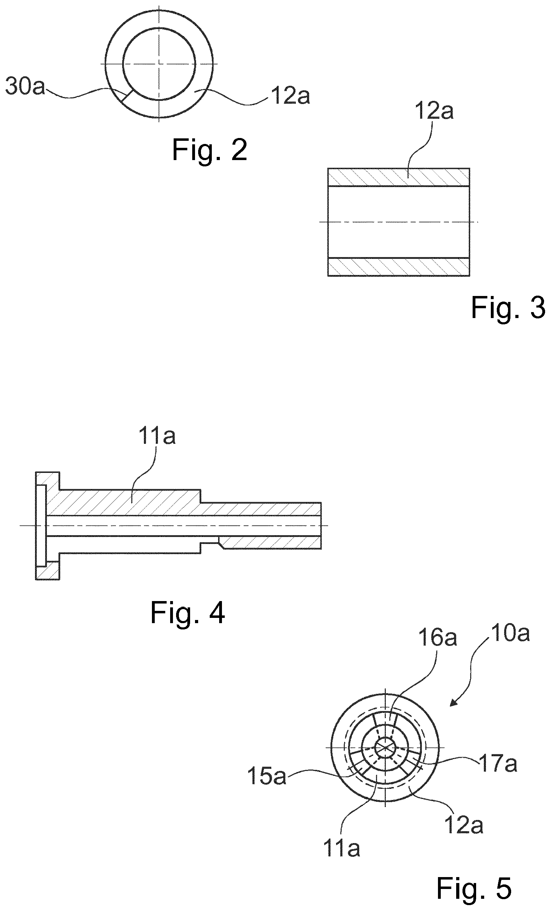

Die Figuren 1 bis 5 zeigen eine Schwingankerpumpe für ein Haushaltsgerät. Die dargestellte Schwingankerpumpe ist zur Förderung einer Flüssigkeit, beispielsweise Wasser, unter einem Druck von zumindest 10 bar vorgesehen. Insbesondere bei Verwendung der Schwingankerpumpe in einem Kaffeeautomaten können Gegendrücke größer als 15 bar auftreten. Gleichzeitig weist die Schwingankerpumpe eine Mindestfördermenge auf, welcher an das Haushaltsgerät, für das die Schwingankerpumpe vorgesehen ist, angepasst ist. Zusätzlich kann ein Maximaldruck, den die Schwingankerpumpe bereitstellen kann, begrenzt sein. Bei Verwendung mit einem Kaffeeautomaten kann die Schwingankerpumpe beispielsweise dazu ausgelegt sein, bei einem Gegendruck von 12 bar zumindest eine Mindestfördermenge von zumindest 190 ml/min bereitzustellen, wobei der Maximaldruck auf ca. 19,5 bar begrenzt ist.

Die Schwingankerpumpe umfasst eine Magnetspule 18a mit einem Spulengehäuse 19a und einen Kolben 10a. Weiter umfasst die Schwingankerpumpe eine auf den Kolben 10a wirkende Pumpfeder 20a. Zudem umfasst die Schwingankerpumpe eine das Spulengehäuse 19a mit der Magnetspule 18a durchsetzende Kolbenführung 38a, die einen Pumpeninnenraum umschließt, in dem der Kolben 10a axial beweglich geführt ist. Die Kolbenführung 38a ist in dem dargestellten Ausführungsbeispiel getrennt von dem Spulengehäuse 19a ausgeführt. Die Kolbenführung 38a selbst kann ebenfalls mehrteilig ausgebildet sein. Die Pumpfeder 20a ist zwischen der fest mit dem Spulengehäuse 19a verbundenen Kolbenführung 38a und dem Kolben 10a abgestützt.

Die Magnetspule 18a ist dazu vorgesehen, ein Magnetfeld zu erzeugen, dass teilweise den Pumpeninnenraum durchsetzt. Zur Lenkung des Magnetfeldes umfasst die Schwingankerpumpe einen Eisenkreis 21a, welcher die Magnetspule 18a teilweise umgibt. Der Eisenkreis 21a umfasst im Bereich des Pumpeninnenraums einen magnetisch isolierenden Spalt 22a, welcher den Eisenkreis 21a unterbricht. Der Eisenkreis 21a umfasst ein Jochelement 35a, welches die Magnetspule 18a insbesondere außen umgibt, sowie zwei an das Jochelement 35a anschließende Polschuhelemente 36a, 37a, zwischen deren Enden der magnetisch isolierende Spalt 22a angeordnet ist.

Der Kolben 10a umfasst ein Ankerelement 12a, das vollständig aus einem magnetisierbaren Material besteht. In einer Ruhestellung, d.h. bei einem Druck von 0 bar innerhalb des Pumpeninnenraums und bei abgeschalteter Magnetspule 18a, weist das Ankerelement 12a eine Position auf, bei der es teilweise mit dem Spalt 22a, den der Eisenkreis 21a unterbricht, axial überlappt. Wird die Magnetspule 18a bestromt, stellt sich ein magnetischer Fluss in dem Eisenkreis 21a und dem Ankerelement 12a ein, wobei ein magnetischer Widerstand, welcher diesem magnetischen Fluss entgegenwirkt, insbesondere durch eine verbleibende Spaltbreite zwischen dem Ankerelement 12a und dem Eisenkreis 21a bestimmt ist. Da ein solches System bestrebt ist, einen Zustand einzunehmen, indem der magnetische Widerstand minimal ist, wirkt auf das Ankerelement 12a eine Betätigungskraft, welche das Ankerelement 12a aus seiner Ruheposition gegen eine Kraft der Pumpfeder 20a auslenkt.

Zur Erzielung einer Pumpwirkung wird die Magnetspule 18a mit einer pulsförmigen Spannung bestromt, wodurch sich im Bereich des Pumpeninnenraums ein ständig veränderndes Magnetfeld einstellt. Das pulsförmig verändernde Magnetfeld wiederum bewirkt, dass der Kolben 10a mit ansteigender Stärke des Magnetfelds zunächst aus seiner Ruhestellung gegen die Kraft der Pumpfeder 20a ausgelenkt wird. Wird das Magnetfeld maximal, ist auch der Kolben 10a maximal ausgelenkt. Sobald ein Strom durch die Magnetspule 18a reduziert wird und damit die Stärke des Magnetfelds wieder abfällt, wird der Kolben 10a durch die Kraft der Pumpfeder 20a wieder in Richtung der Ruhestellung bewegt. Der Magnetspule 18a ist dabei vorzugsweise einen Diodeneinheit vorgeschaltet, wodurch die Magnetspule 18a lediglich mit einer Halbwelle einer Wechselspannung bestromt wird. In dem dargestellten Ausführungsbeispiel ist die Magnetspule 18a für eine Wechselspannung von 230 V bei 50 Hz vorgesehen.

Der Pumpeninnenraum bildet bei montiertem Kolben 10a eine Vorkammer 23a und eine Kompressionskammer 24a aus. Der Kolben 10a umfasst ein Kolbenventil 25a, das strömungstechnisch zwischen der Vorkammer 23a und der Kompressionskammer 24a angeordnet ist. Das Kolbenventil 25a ist in Form eines Rückschlagventils ausgebildet, welches eine Durchlassrichtung von der Vorkammer 23a in die Kompressionskammer 24a aufweist. In einem Füllhub, bei dem der Kolben 10a durch das Magnetfeld entgegen der Kraft der Pumpfeder 20a bewegt wird, strömt Fluid von der Vorkammer 23a durch das Kolbenventil 25a in die Kompressionskammer 24a. In einem anschließenden Druckhub, bei dem der Kolben 10a durch die Kraft der Pumpfeder 20a bewegt wird, wird das Fluid aus der Kompressionskammer 24a herausgedrückt. Der Maximaldruck, der dabei auf das Fluid wirkt, hängt insbesondere von der Kraft der Pumpfeder 20a ab. Ein Weg, um den der Kolben 10a dabei bewegt wird, hängt von einer Ausgestaltung der Schwingkolbenpumpe ab. Bei einer Ausgestaltung als Hochdruckpumpe wird der Kolben 10a um ca. 10-11 mm bewegt. Bei einer Ausgestaltung als Niederdruckpumpe wird der Kolben 10a um ca. 9-10 mm bewegt.

Der Kolben 10a ohne das Kolbenventil 25a ist in dem dargestellten Ausführungsbeispiel dreiteilig ausgeführt. Der Kolben 10a, der zur Förderung des Fluids vorgesehen ist, umfasst ein Druckkolbenelement 11a und das von dem Druckkolbenelement 11a getrennt ausgeführte Ankerelement 12a. Zudem umfasst der Kolben 10a ein Dichtelement 26a, das eine äußere Dichtfläche 27a aufweist, welche für eine fluiddichte Verbindung mit der Kolbenführung 38a vorgesehen ist. Die Dichtfläche 27a weist eine Axialerstreckung auf, die an eine maximal mögliche Auslenkung des Kolbens 10a gegenüber der Kolbenführung 38a angepasst ist.

Das Ankerelement 12a und das Druckkolbenelement 11a sind für eine Kraftrichtung fest miteinander gekoppelt. Das Ankerelement 12a ist in Form einer Hülse ausgeführt und besteht vollständig aus dem magnetisierbaren Material. Das Druckkolbenelement 11a besteht vollständig aus einem nichtmagnetischen Material. Das Magnetfeld und damit die Betätigungskraft, die mittels der Magnetspule 18a eingestellt werden kann, wirkt damit insbesondere auf das Ankerelement 12a, welches für die Kraftrichtung, die der durch das Magnetfeld wirkenden Betätigungskraft entspricht, fest mit dem Druckkolbenelement 11a gekoppelt ist.

Das Ankerelement 12a ist vollständig in der Vorkammer 23a angeordnet. Zwischen der Vorkammer 23a und der Kompressionskammer 24a umfasst die Kolbenführung 38a eine Dichtung 28a, an der die Dichtfläche 27a des Dichtelements 26a des Kolbens 10a anliegt. Das Druckkolbenelement 11a, an welches das Ankerelement 12a und das Dichtelement 26a angebunden sind, durchsetzt eine Dichtebene, die durch die Dichtung 28a geometrisch aufgespannt wird. In der Ruhestellung ist das Druckkolbenelement 11a teilweise in der Kompressionskammer 24a und teilweise in der Vorkammer 23a angeordnet.

Das Druckkolbenelement 11a ragt in der Ruhestellung in die Kompressionskammer 24a hinein. Bei einer Bestromung der Magnetspule 18a wird das Druckkolbenelement 11a maximal um diesen Weg aus der Ruhestellung herausbewegt. Wird der Kolben 10a durch die Pumpfeder 20a wieder in Richtung der Ruhestellung bewegt, verdrängt das Druckkolbenelement 11a das Fluid aus der Kompressionskammer 24a. Die Kompressionskammer 24a weist dabei einen Ausgang mit einem Auslassventil 29a auf, durch welches das Fluid herausgedrückt wird. Das Ankerelement 12a ist in Form einer Hülse ausgebildet, welche das Druckkolbenelement 11a nahezu vollständig umschließt. Das Ankerelement 12a ist als ein Biegebauteil ausgebildet, das durch Umbiegen eines Halbzeugs hergestellt wird. Als Halbzeug für das Ankerelement 12a wird vorzugsweise ein Blech verwendet, welches in Form der Hülse gebogen wird. Das Ankerelement 12a weist in dem dargestellten Ausführungsbeispiel einen runden Querschnitt aus. Grundsätzlich kann das Ankerelement 12a aber auch einen zumindest teilweise ovalen oder zumindest teilweise eckigen Querschnitt, wie beispielsweise einen abgeflachten Querschnitt, aufweisen.

Das Ankerelement 12a ist als ein Blechbiegeteil ausgebildet, welches in Form der Hülse gerollt ist. Das Ankerelement 12a weist dadurch an einer Seite einen Längsschlitz 30a auf, welcher durch Seitenkanten des ursprünglichen Blechs gebildet wird. Die Seitenkanten grenzen dabei lose aneinander. Der Längsschlitz 30a weist eine Breite von nahezu Null auf, d.h. das Ankerelement 12a hat eine Umfangserstreckung von nahezu 360 °. Grundsätzlich können die Seitenkanten aber auch form- und/oder stoffschlüssig miteinander verbunden werden, wodurch das Ankerelement 12a als vollständige Hülse mit einem runden Querschnitt ausgebildet werden kann. Zur Verringerung von Toleranzen kann das Ankerelement 12a nach dem Umformen spitzenlos geschliffen werden.

Das Ankerelement 12a ist aus einem korrosionsbeständigen Stahl. Als Material wird ein legierter Stahl nach EN 1.4016 oder EN 1.4113 verwendet. Beides sind Stahlsorten mit einem unterschiedlichen Chromgehalt. Insbesondere durch den Chromgehalt weisen beide Stahlsorten einen verbesserten Korrosionsschutz auf, wobei Stahl nach EN 1.4113 diesbezüglich als höherwertig einzuschätzen ist als Stahl nach EN 1.4016. Stahl nach EN 1.4016 (X₆Cr₁₇) weist einen Chromgehalt von 16 % auf. Stahl nach EN 1.4131 (X₆CrMo₁₇) weist einen niedrigeren Chromgehalt auf. Das Ankerelement 12a ist daher vorzugsweise aus Stahl nach EN 1.4131.

Das Ankerelement 12a ist auf das Druckkolbenelement 11a, welches das Ankerelement 12a vollständig durchsetzt, aufgesteckt. Das Druckkolbenelement 11a bildet für das Ankerelement 12a eine Aufnahme aus, die zur axialen Fixierung des Ankerelements 12a lediglich auf einer Seite einen Anschlag 31a aufweist, an dem das Ankerelement 12a in montiertem Zustand anliegt. Das Ankerelement 12a und das Druckkolbenelement 11a sind damit lediglich durch eine formschlüssige Verbindung, welche lediglich axiale Kräfte aufnehmen kann, fest miteinander verbunden. In radialer Richtung kann die Aufnahme für das Ankerelement 12a spielbehaftet sein. Auf eine kraft- und/oder stoffschlüssige Verbindung zwischen dem Ankerelement 12a und dem Druckkolbenelement 11a wird verzichtet. Die Aufnahme, auf welcher das Ankerelement 12a angeordnet ist, ist in axialer Richtung frei von Hinterschnitten, welche zur Fixierung des Ankerelements 12a dienen.

In montiertem Zustand liegt das Ankerelement 12a mit der Seite, die der Vorkammer 23a zugewandt ist, an dem Anschlag 31a an. Der Anschlag 31a ist in Form einer Stufe ausgebildet, welche lediglich zur formschlüssigen Verbindung mit einer Stirnseite des Ankerelements 12a vorgesehen ist. Der Anschlag 31a ist dabei dazu vorgesehen, die Kraft, die mittels der Magnetspule 18a erzeugt werden kann, aufzunehmen

Das Druckkolbenelement 11a ist als ein Kunststoffteil ausgebildet. Als Kunststoff wird dabei ein temperaturbeständiger Thermoplast verwendet. Das Druckkolbenelement 11a kann dabei grundsätzlich mittels eines Tiefziehverfahrens hergestellt werden. Vorzugsweise ist das Druckkolbenelement 11a jedoch als ein Spritzgussbauteil ausgebildet.

Das Druckkolbenelement 11a weist einen Förderkanal 32a und eine Mehrzahl von Druckausgleichskanälen 15a, 16a, 17a auf. Der Förderkanal 32a, in dem das Kolbenventil 25a angeordnet ist, dient zur Verbindung der Vorkammer 23a mit der Kompressionskammer 24a. Die Vorkammer 23a weist durch die Anordnung des Ankerelements 12a einen vorderen Teil und einen hinteren Teil auf, welche durch die Druckausgleichskanäle 15a, 16a, 17a drucktechnisch parallel geschaltet sind. In dem vorderen Teil ist dabei die Pumpfeder 20a angeordnet. In dem hinteren Teil ist ein Gehäuseanschlag 33a für den Kolben 10a vorgesehen, welcher eine Bewegung des Kolbens 10a begrenzt. Der Gehäuseanschlag 33a weist vorzugsweise elastische Elemente zur Dämpfung.

Der Förderkanal 32a ist in Form einer Bohrung ausgebildet, welche das Druckkolbenelement 11a entlang seiner Längsachse vollständig durchsetzt. Im Bereich der Aufnahme für das Ankerelement 12a sind die Druckausgleichskanäle 15a, 16a, 17a in Form von Nuten in das Druckkolbenelement 11a eingebracht. Im Bereich der Aufnahme sind die Druckausgleichskanäle 15a, 16a, 17a als Vertiefungen ausgebildet, welche radial außen in das Druckkolbenelement 11a eingebracht sind. In montiertem Zustand begrenzt das Ankerelement 12a in Teilbereichen die Druckausgleichskanäle 15a, 16a, 17a, die stirnseitig durch den Anschlag 31a für das Ankerelement 12a hindurchgeführt sind und die im Bereich des Gehäuseanschlags 33a für den Kolben 10a enden. Die Druckausgleichskanäle 15a, 16a, 17a enden dabei vor der Dichtebene der Dichtung 28a. Lediglich der Förderkanal 32a führt durch die Dichtebene hindurch. Indem das Druckkolbenelement 11a als Spritzgussbauteil ausgebildet ist, werden der Förderkanal 32a und die Druckausgleichskanäle 15a, 16a, 17a direkt beim Ausformen eingebracht. Grundsätzlich ist aber auch eine spanende Bearbeitung denkbar.

Zur Wirkverbindung mit der Dichtung 28a weist der Kolben 10a das Dichtelement 26a auf, welches in Form einer Hülse ausgebildet und fest mit dem Druckkolbenelement 11a verbunden ist. Das Dichtelement 26a, das die äußere Dichtfläche 27a aufweist, ist aus Metall ausgebildet. Bei einer Bewegung des Kolbens 10a bildet die Dichtfläche 27a eine Gleitfläche für die Dichtung 28a aus. Das Druckkolbenelement 11a weist einen Hinterschnitt auf, der für einen Eingriff mit dem Dichtelement 26a vorgesehen ist. Das Dichtelement 26a ist an seinem der Vorkammer 23a zugewandten Ende nach innen gebogen und bildet eine Klammer aus. In montiertem Zustand greift die durch das Dichtelement 26a ausgebildete Klammer in den Hinterschnitt ein und verbindet das Dichtelement 26a und das Druckkolbenelement 11a verliersicher miteinander. An einem der Kompressionskammer 24a zugewandten Ende ist das Dichtelement 26a um das Druckkolbenelement 11a umgebördelt. Grundsätzlich ist es aber auch denkbar, das Dichtelement 26a als Tiefziehteil mit einer entsprechenden Ausgestaltung auszubilden. Das Kolbenventil 25a, welches mit dem Druckkolbenelement 11a verbunden ist, schließt dichtend mit dem Dichtelement 26a ab.

In der Grundstellung drückt die Pumpfeder 20a den Kolben 10a gegen den Gehäuseanschlag 33a. Das Ankerelement 12a ist dadurch zwischen dem durch das Druckkolbenelement 11a ausgebildeten Anschlag 31a und dem Gehäuseanschlag 33a axial fixiert. Während des Füllhubs greift die mittels der Magnetspule 18a erzeugte Betätigungskraft an dem Ankerelement 12a an. Das Ankerelement 12a wird dadurch gegen den Anschlag 31a gedrückt, wodurch es axial fixiert ist. Während des Pumphubs wird das Fluid, welches in der Vorkammer 23a ist, über die Druckausgleichskanäle 15a, 16a, 17a zwischen dem hinteren Teil und dem vorderen Teil der Vorkammer 23a umgeschichtet. Eine dadurch entstehende Druckdifferenz wirkt zumindest teilweise auf das Ankerelement 12a und verspannt es gegen den Anschlag 31a des Druckkolbenelements 11a. Zudem wird das Ankerelement 12a aufgrund seiner Massenträgheit bei einer Beschleunigung des Kolbens 10a während des Pumpbhubs gegen den Anschlag 31a gedrückt. Obwohl das Ankerelement 12a lediglich entlang der Betätigungskraft formschlüssig mit dem Druckkolbenelement 11a verbunden ist, ist eine axiale Position des Ankerelements 12a stets definiert.

Die Schwingankerpumpe ist in dem dargestellten Ausführungsbeispiel als Hochdruckpumpe für ein Haushaltsgerät ausgebildet. Das Ankerelement 12a weist einen Innendurchmesser von 14 mm und einen Außendurchmesser von 20 mm auf. Das Blech, aus dem das Ankerelement 12a geformt ist, weist daher eine Stärke von 3 mm auf. Die Magnetspule 18a weist einen Spulendurchmesser von 47 mm auf, d.h. ein maximaler Durchmesser des die Magnetspule 18a umgebenden Spulengehäuses 19a beträgt 47 mm. Der Spulendurchmesser ist damit um einen Faktor 2,35 größer als der Außendurchmesser des Ankerelements 12a.

In einer Ausgestaltung als Niederdruckpumpe weisen das Ankerelement 12a und die Magnetspule 18a der Schwingankerpumpe andere Abmessung auf. Das Ankerelement 12a weist dann einen Innendurchmesser von 9 mm und einen Außendurchmesser von 13 mm auf. Das Blech, aus dem das Ankerelement 12a geformt ist, weist damit eine Stärke von 2 mm auf. Die Magnetspule 18a weist in einer solchen Ausgestaltung einen Spulendurchmesser von 32,5 mm auf. Der Spulendurchmesser ist dann um einen Faktor von 2,5 größer als der Außendurchmesser des Ankerelements 12a und damit kleiner als 3,0.

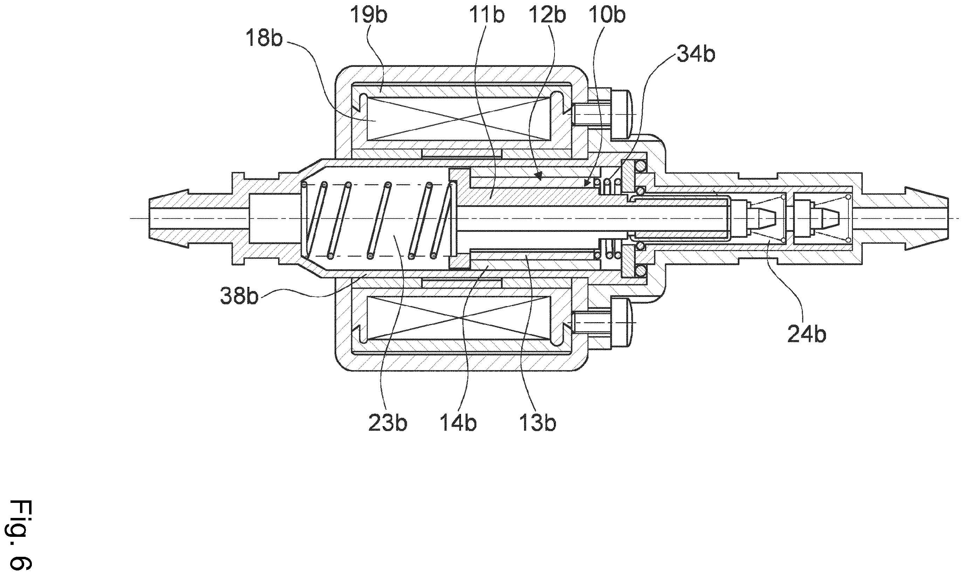

In der Figur 6 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 5 verwiesen werden kann. Zur Unterscheidung der Ausführungsbeispiele ist der Buchstabe a in den Bezugszeichen des Ausführungsbeispiels in den Figuren 1 bis 5 durch den Buchstaben b in den Bezugszeichen des Ausführungsbeispiels der Figur 6 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 5 verwiesen werden.

Figur 6 zeigt einen Schwingankerpumpe mit einer Magnetspule 18b und einem Kolben 10b, der zur Förderung eines Fluids unter Wirkung eines Gegendrucks vorgesehen ist. Der Kolben 10b weist ein Druckkolbenelement 11b und ein von dem Druckkolbenelement 11b getrennt ausgeführtes Ankerelement 12b auf. Das Ankerelement 12b ist für eine Kraftrichtung fest mit dem Druckkolbenelement 11b gekoppelt. Das Ankerelement 12b ist in Form einer Hülse ausgeführt und besteht aus einem magnetisierbaren Material. Entsprechend dem vorangegangen Ausführungsbeispiel ist das Ankerelement 12b als ein Biegebauteil ausgebildet.

Im Unterschied zu dem vorangegangenen Ausführungsbeispiel ist das Ankerelement 12b aus einem Blech geformt, welches zweiteilig ausgeführt ist. Das Ankerelement 12b weist ein inneres Blechelement 13b und ein äußeres Blechelement 14b auf. Das innere Blechelement 13b ist innerhalb des äußeren Blechelements 14b angeordnet. Bei einer Herstellung des Ankerelements 12b werden die beiden Blechelemente 13b, 14b zunächst fest miteinander verbunden, beispielsweise durch Sicken, welche in die Blechelemente 13b, 14b eingebracht werden, nachdem sie aufeinander gelegt wurden. Alternativ zu einer formschlüssigen Verbindung können die Blechelemente 13b, 14b auch stoffschlüssig miteinander verbunden werden. Die beiden miteinander verbundenen Blechelemente 13b, 14b bilden dann das Blech aus, welches gerollt wird, um es als das Ankerelement 12b in Form einer Hülse auszubilden.

Das innere Blechelement 13b und das äußere Blechelement 14b weisen unterschiedliche axiale Längen auf. Auf der einen Seite, die in montiertem Zustand einer Vorkammer 23b der Schwingankerpumpe zugewandt ist, enden das innere Blechelement 13b und das äußere Blechelement 14b in der gleichen Ebene. Auf der anderen Seite, die in montiertem Zustand einer Kompressionskammer 24b der Schwingankerpumpe zugewandt ist, steht das äußere Blechelement 14b in axialer Richtung über das innere Blechelement 13b über. Das Ankerelement 12b weist dadurch zwei Teilbereiche mit unterschiedlichen Materialstärken auf. Die beiden Blechelemente 13b, 14b selbst weisen in dem dargestellten Ausführungsbeispiel eine im Wesentlichen gleiche Materialstärke auf.

Weiter ist in diesem Ausführungsbeispiel der Kolben 10b aufgrund seiner Massenträgheit über eine Ruhestellung hinaus bewegbar. Zur Dämpfung der Bewegung des Kolbens 10b weist die Schwingankerpumpe zusätzlich zur Pumpfeder 20b eine Dämpfungsfeder 34b auf, die der Pumpfeder 20b entgegen wirkt.

Der eine Teilbereich, in dem die Materialstärke größer ist, ist insbesondere zur Lenkung des Magnetfeldes der Magnetspule 18b vorgesehen. Der andere Teilbereich bildet eine Aufnahme für die Dämpfungsfeder 34b aus. Die Seite des Ankerelements 12b, auf der die beiden Blechelemente 13b, 14b in der gleichen Ebene enden, dient zur formschlüssigen Verbindung mit dem Druckkolbenelement 11b. Die Seite, auf der das äußere Blechelement 14b über das innere Blechelement 13b übersteht, bildet die Aufnahme für die Dämpfungsfeder 34b aus. Das äußere Blechelement 13b umgibt die Dämpfungsfeder 34b, die radial durch das Druckkolbenelement 11b geführt ist. Die Dämpfungsfeder 34b ist axial zwischen dem inneren Blechelement 13b und einer Kolbenführung 38b, die fest mit einem Spulengehäuse 19b der Schwingankerpumpe verbunden ist, abgestützt.

Grundsätzlich kann auch auf der Seite, auf der in dem dargestellten Ausführungsbeispiel die Blechelemente 13b, 14b in der gleichen Ebene enden, das äußere Blechelement 14b über das innere Blechelement 13b überstehen. Ein Überstand ist dabei vorzugsweise höchstens halb so groß wie die Materialstärke beider Blechelemente 13b, 14b zusammen. Der Überstand beträgt dabei vorzugsweise ca. 1 mm.

## Patentansprüche

1. Kolben für eine Schwingankerpumpe, der zur Förderung eines Fluids unter Wirkung eines Gegendrucks vorgesehen ist, mit einem Druckkolbenelement (11a; 11b) und einem von dem Druckkolbenelement (11a; 11b) getrennt ausgeführten, für zumindest eine Kraftrichtung fest mit dem Druckkolbenelement (11a; 11b) gekoppelten Ankerelement (12a; 12b), das in Form einer Hülse ausgeführt ist und das wenigstens teilweise aus einem magnetisierbaren Material besteht,
**dadurch gekennzeichnet, dass**
das Ankerelement (12a; 12b) als ein Biegebauteil ausgebildet ist, wobei das Druckkolbenelement (11a; 11b) das Ankerelement (12a; 12b) vollständig durchsetzt, wobei das Ankerelement (12a; 12b) auf das Druckkolbenelement (11a; 11b) aufgesteckt ist, und in axialer Richtung lediglich durch einen Formschluss, welcher eine Aufstecktiefe begrenzt, fixiert ist.

2. Kolben nach Anspruch 1,
**dadurch gekennzeichnet, dass**
das Ankerelement (12a; 12b) als ein Blechbiegeteil ausgebildet ist, welches in Form der Hülse gerollt ist.

3. Kolben nach Anspruch 2,
**dadurch gekennzeichnet, dass**
das Ankerelement (12b) zumindest ein äußeres Blechelement (13b) und zumindest ein wenigstens teilweise innerhalb des äußeren Blechelements (13b) angeordnetes inneres Blechelement (14b) aufweist.

4. Kolben nach Anspruch 3,
**dadurch gekennzeichnet, dass**
das äußere Blechelement (14b) in axialer Richtung über das innere Blechelement (13b) übersteht.

5. Kolben nach einem der vorhergehenden Ansprüche,
**dadurch gekennzeichnet, dass**
das Ankerelement (12a; 12b) korrosionsbeständig ist.

6. Kolben nach einem der vorhergehenden Ansprüche,
**dadurch gekennzeichnet, dass**
das Druckkolbenelement (11a; 11b) als ein Kunststoffteil ausgebildet ist.

7. Kolben nach einem der vorhergehenden Ansprüche,
**dadurch gekennzeichnet, dass**
das Druckkolbenelement (11a; 11b) als ein Spritzgussbauteil ausgebildet ist.

8. Kolben nach einem der vorhergehenden Ansprüche,
**dadurch gekennzeichnet, dass**
das Druckkolbenelement (11a; 11b) zumindest einen Druckausgleichskanal (15a, 16a, 17a) aufweist.

9. Kolben nach einem der vorhergehenden Ansprüche,
**gekennzeichnet durch**
ein Dichtelement (26a), welches fest mit dem Druckkolbenelement (11a; 11b) verbunden ist.

10. Schwingkolbenpumpe mit einer Magnetspule (18a; 18b) und mit einem Kolben (10a; 10b) nach einem der vorhergehenden Ansprüche, der ein Druckkolbenelement (11a; 11b) zur Förderung eines Fluids und ein von dem Druckkolbenelement (11a; 11b) getrennt ausgeführtes, für zumindest eine Kraftrichtung fest mit dem Druckkolbenelement (11a; 11b) gekoppeltes Ankerelement (12a; 12b) in Form einer Hülse, die wenigstens teilweise aus einem magnetisierbaren Material besteht, aufweist,
**dadurch gekennzeichnet, dass**
die Magnetspule (18a; 18b) einen Spulendurchmesser aufweist, der höchstens um einen Faktor 3,0 größer ist als ein Außendurchmesser des Ankerelements (12a; 12b).

11. Verfahren zur Herstellung eines Kolbens (10a; 10b) für eine Schwingankerpumpe, der zur Förderung eines Fluids unter Wirkung eines Gegendrucks vorgesehen ist, mit einem Druckkolbenelement (11a; 11b) und einem von dem Druckkolbenelement (11a; 11b) getrennt ausgeführten, für zumindest eine Kraftrichtung fest mit dem Druckkolbenelement (11a; 11b) gekoppelten Ankerelement (12a; 12b), das wenigstens teilweise aus einem magnetisierbaren Material besteht,
**dadurch gekennzeichnet, dass**
das Ankerelement (12a; 12b) in der Form einer Hülse gebogen wird, wobei das Druckkolbenelement (11a; 11b) das Ankerelement (12a; 12b) vollständig durchsetzt, wobei das Ankerelement (12a; 12b) auf das Druckkolbenelement (11a; 11b) aufgesteckt ist und in axialer Richtung lediglich durch einen Formschluss, welcher eine Aufstecktiefe begrenzt, fixiert ist.

## Claims

1. Piston for an oscillating armature pump, which is configured for conveying a fluid under the impact of a counter-pressure, with a pressure piston element (11a; 11b) and with an armature element (12a; 12b) which is implemented separately from the pressure piston element (11a; 11b), which is fixedly coupled with the pressure piston element (11a; 11b) for at least one force direction, and which is implemented in the shape of a sleeve that is at least partially made of a magnetisable material,
**characterised in that** the armature element (12a; 12b) is embodied as a flexural component, wherein the pressure piston element (11a; 11b) penetrates the armature element (12a; 12b) completely, wherein the armature element (12a; 12b) is plugged onto the pressure piston element (11a; 11b), and is, in an axial direction, fixated just by a form-fit that delimits a plug-on depth.

2. Piston according to claim 1,
**characterised in that** the armature element (12a; 12b) is embodied as a flexural metal-sheet part that is rolled up to form a sleeve.

3. Piston according to claim 2,
**characterised in that** the armature element (12b) comprises at least one outer metal-sheet element (13b) and at least one inner metal-sheet element (14b) that is arranged at least partially within the outer metal-sheet element (13b).

4. Piston according to claim 3,
**characterised in that** the outer metal-sheet element (14b) protrudes beyond the inner metal-sheet element (13b) in an axial direction.

5. Piston according to one of the preceding claims,
**characterised in that** the armature element (12a; 12b) is corrosion-resistant.

6. Piston according to one of the preceding claims,
**characterised in that** the pressure piston element (11a; 11b) is embodied as a synthetic part.

7. Piston according to one of the preceding claims,
**characterised in that** the pressure piston element (11a; 11b) is embodied as an injection-moulded structural component.

8. Piston according to one of the preceding claims,
**characterised in that** the pressure piston element (11a; 11b) comprises at least one pressure compensation channel (15a, 16a, 17a).

9. Piston according to one of the preceding claims,
**characterised by** a sealing element (26a), which is fixedly connected with the pressure piston element (11a; 11b).

10. Oscillating armature pump with a magnet coil (18a; 18b) and with a piston (10a; 10b) according to one of the preceding claims, said piston (10a; 10b) comprising a pressure piston element (11a; 11b) for conveying a fluid, and comprising an armature element (12a; 12b) shaped as a sleeve that is at least partially made of a magnetisable material, which is embodied separately from the pressure piston element (11a; 11b) and which is fixedly coupled with the pressure piston element (11a; 11b) for at least one force direction,
**characterised in that** the magnet coil (18a; 18b) has a coil diameter that is greater than an outer diameter of the armature element (12a; 12b) by a factor of maximally 3.0.

11. Method for a production of a piston (10a; 10b) for an oscillating armature pump, which is configured for conveying a fluid under the impact of a counter-pressure, with a pressure piston element (11a; 11b) and with an armature element (12a; 12b) which is embodied separately from the pressure piston element (11a; 11b) and is fixedly coupled with the pressure piston element (11a; 11b) for at least one force direction and is at least partially made of a magnetisable material,
**characterised in that** the armature element (12a; 12b) is bent in a sleeve-shape, with the pressure piston element (11a; 11b) penetrating the armature element (12a; 12b) completely, wherein the armature element (12a; 12b) is plugged onto the pressure piston element (11a; 11b) and is, in an axial direction, fixated just by a form-fit that delimits a plug-on depth.

## Revendications

1. Piston pour une pompe à armature oscillante,
prévu pour un convoyage d'un fluide sous l'impact d'une contre-pression,
avec un élément piston de pression (11a ; 11b)
et avec un élément d'armature (12a ; 12b) qui est réalisé séparément de l'élément piston de pression (11a ; 11b), qui est raccordé fixement avec l'élément piston de pression (11a ; 11b) par rapport à au moins une direction de force et qui est réalisé en forme d'une cosse composée au moins partiellement d'un matériau magnétisable,
**caractérisé en ce que**
l'élément d'armature (12a ; 12b) est réalisé comme composant pliant,
l'élément piston de pression (11a ; 11b) pénétrant complètement l'élément d'armature (12a ; 12b),
l'élément d'armature (12a ; 12b) étant enfiché sur l'élément piston de pression (11a ; 11b) et étant fixé en direction axiale seulement par une liaison en forme, qui délimite une profondeur d'enfichage.

2. Piston selon la revendication 1,
**caractérisé en ce que** l'élément piston de pression (11a ; 11b) est réalisé comme composant de pliage en tôle, qui est roulé en forme de cosse.

3. Piston selon la revendication 2,
**caractérisé en ce que** l'élément d'armature (12b) comporte au moins un élément de tôle extérieur (13b) et au moins un élément de tôle intérieur (14b) qui est agencé au moins partiellement dans l'élément de tôle extérieur (13b).

4. Piston selon la revendication 3,
**caractérisé en ce que** l'élément de tôle extérieur (14b) dépasse l'élément de tôle intérieur (13b) en direction axiale.

5. Piston selon l'une quelconque des revendications précédentes,
**caractérisé en ce que** l'élément d'armature (12a ; 12b) est résistant à la corrosion.

6. Piston selon l'une quelconque des revendications précédentes,
**caractérisé en ce que** l'élément piston de pression (11a ; 11b) est réalisé comme part synthétique.

7. Piston selon l'une quelconque des revendications précédentes,
**caractérisé en ce que** l'élément piston de pression (11a ; 11b) est réalisé comme composant moulé par injection.

8. Piston selon l'une quelconque des revendications précédentes,
**caractérisé en ce que** l'élément piston de pression (11a ; 11b) comporte au moins un canal à compensation de pression (15a, 16a, 17a).

9. Piston selon l'une quelconque des revendications précédentes,
**caractérisé par** un élément d'étanchéité (26a) qui est raccordé fixement avec l'élément piston de pression (11a ; 11b).

10. Pompe à armature oscillante
avec une bobine magnétique (18a ; 18b)
et avec un piston (10a ; 10b) selon l'une quelconque des revendications précédentes,
ledit piston comprenant un élément piston de pression (11a ; 11b) pour un convoyage d'un fluide
et comprenant un élément d'armature (12a ; 12b) en forme d'une cosse composée au moins partiellement d'un matériau magnétisable, ledit élément d'armature (12a ; 12b) étant réalisé séparément de l'élément piston de pression (11a ; 11b) et étant est raccordé fixement avec l'élément piston de pression (11a ; 11b) par rapport à au moins une direction de force,
**caractérisé en ce que**
la bobine magnétique (18a ; 18b) présente un diamètre bobine qui est plus grand qu'un diamètre extérieur de l'élément d'armature (12a ; 12b) d'un facteur 3,0 maximalement.

11. Procédé pour la production d'un piston (10a ; 10b) pour une pompe à armature oscillante,
ledit piston (10a ; 10b) étant prévu pour un convoyage d'un fluide sous l'impact d'une contre-pression,
avec un élément piston de pression (11a ; 11b)
et avec un élément d'armature (12a ; 12b) qui est réalisé séparément de l'élément piston de pression (11a ; 11b), qui est raccordé fixement avec l'élément piston de pression (11a ; 11b) pour au moins une direction de force et qui se compose au moins partiellement d'un matériau magnétisable,
**caractérisé en ce que** l'élément d'armature (12a ; 12b) est fléchi en forme d'une cosse,
l'élément piston de pression (11a ; 11b), pénétrant complétement l'élément d'armature (12a ; 12b),
l'élément d'armature (12a ; 12b) étant enfiché sur l'élément de piston de pression (11a ; 11b) et étant fixé en direction axiale seulement par une liaison en forme, qui délimite une profondeur d'enfichage.
